(19) Europäisches Patentamt / European Patent Office / Office européen des brevets

(11) **EP 4 116 363 A1**

(12) **EUROPÄISCHE PATENTANMELDUNG**

(43) Veröffentlichungstag:
**11.01.2023 Patentblatt 2023/02**

(21) Anmeldenummer: **21183864.4**

(22) Anmeldetag: **06.07.2021**

(51) Internationale Patentklassifikation (IPC):
**C08J 9/00** (2006.01) **C08J 9/10** (2006.01)

(52) Gemeinsame Patentklassifikation (CPC):
**C08J 9/103; C08J 9/0009; C08J 9/0023;
C08J 9/105;** C08J 2201/026; C08J 2323/08

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Henkel AG & Co. KGaA
40589 Düsseldorf (DE)**

(72) Erfinder:
• **Klotz, Michael
68353 Edingen-Neckarhausen (DE)**
• **Rappmann, Klaus
69469 Weinheim-Rittenweier (DE)**
• **Sauer, Ralf
68789 St. Leon-Rot (DE)**
• **Cappel, Fiona
69231 Rauenberg (DE)**

(54) **THERMISCH EXPANDIERBARE ZUSAMMENSETZUNGEN UMFASSEND WACHS**

(57) Die vorliegende Anmeldung betrifft eine thermisch expandierbare Zusammensetzung, die mindestens ein peroxidisch vernetzendes Polymer, mindestens ein Peroxid, mindestens ein Treibmittel und mindestens ein Wachs enthält, Formkörper, die diese Zusammensetzung enthalten, sowie ein Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung derartiger Formkörper.

EP 4 116 363 A1

**Beschreibung**

Die vorliegende Anmeldung betrifft eine thermisch expandierbare Zusammensetzung, die mindestens ein peroxidisch vernetzendes Polymer, mindestens ein Peroxid, mindestens ein Treibmittel und mindestens ein Wachs enthält, Formkörper, die diese Zusammensetzung enthalten, sowie ein Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung derartiger Formkörper.

Moderne Fahrzeuge und Fahrzeugteile weisen eine Vielzahl von Hohlräumen auf, die abgedichtet werden müssen, um den Eintritt von Feuchtigkeit und Verschmutzungen zu verhindern, da es sonst zur Korrosion an den entsprechenden Karosserieteilen von innen heraus führen kann. Dies trifft insbesondere auf moderne selbst tragende Karosseriekonstruktionen zu, bei denen eine schwere Rahmenkonstruktion durch leichtgewichtige, strukturfeste Rahmengerüste aus vorgefertigten Hohlraumprofilen ersetzt wird. Derartige Konstruktionen weisen systembedingt eine Reihe von Hohlräumen auf, die gegen das Eindringen von Feuchtigkeit und Verschmutzungen abgedichtet werden müssen. Derartige Abdichtungen dienen weiterhin dem Zweck, die Weiterleitung von Luftschall in derartigen Hohlräumen zu vermeiden und somit unangenehme Fahrzeuglauf- und Windgeräusche zu mindern und somit den Fahrkomfort im Fahrzeug zu steigern.

Schottteile, die eine abdichtende und/oder akustische Wirkung in derartigen Hohlräumen bewirken, werden häufig als "pillar filler", "baffles" oder "acoustic baffles" bezeichnet. Sie bestehen in der Regel entweder vollständig aus thermisch expandierbaren Formkörpern oder aus Formkörpern, die einen Träger und in ihrem Peripheriebereich expandierbare polymere Zusammensetzungen enthalten. Diese Schottteile werden im Rohbau durch Einhängen, Einclipsen, Einkleben, Verschrauben oder Anschweißen an den offenen Baustrukturen befestigt. Nach dem Schließen der Baustrukturen im Rohbau und den weiteren Vorbehandlungen der Karosserie wird dann die Prozesswärme der Öfen zur Aushärtung der kathodischen Tauchlackierung ausgenutzt, um die Expansion des expandierbaren Teils des Schottteils auszulösen um somit den Querschnitt des Hohlraums abzudichten.

In modernen Fahrzeugen werden ferner immer häufiger metallische und/oder kunststoffbasierte Leichtbauteile für eine konstant maßhaltige Serienfertigung mit vorgegebener Steifigkeit und Strukturfestigkeit benötigt. Insbesondere im Fahrzeugbau ist im Zuge der gewünschten Gewichtsersparnis Bedarf für metallische Leichtbauteile aus dünnwandigen Blechen, die trotzdem ausreichende Steifigkeit und Strukturfestigkeit besitzen. Auch hier kommen Formkörper aus thermisch expandierbaren Zusammensetzungen, die die nötigen Stützeigenschaften verleihen zum Einsatz.

Entsprechende thermisch expandierbare Zusammensetzung werden zum Beispiel in den Schriften WO 2008/034755, WO 2007/039309, WO 2013/017536 der deutschen Anmeldung 10 2012 221 192.6 sowie WO 2017/055330, WO 2017/055329, WO 2017/108809 und WO 2018/234368 beschrieben. Diese thermisch expandierbaren Zusammensetzungen finden auch Einsatz im Automobilbereich.

In derartigen expandierbaren Zusammensetzungen, wie beispielsweise Kautschuk-Vulkanisaten (Schwefel, Peroxid oder Benzochinondioxim) zur Abdichtung und Verklebung, Ethylenvinylacetatbasierten Hohlraumabschottungen, Epoxid-basierten Stützschäumen und expandierbaren Versiegelungsmassen im Automobilbau, werden heutzutage exotherme Treibmittel, wie beispielsweise ADCA (Azodicarbonamid), OBSH (4,4'-Oxybis(benzolsulfonylhydrazid)), DNPT (Dinitrosopentamethylentetramin), PTSS (p-Toluolsemicarbazid), BSH (Benzol-4-sulfonohydrazid), TSH (Toluol-4-sulfonohydrazid), 5-PT (5-Phenyltetrazol) und ähnliche, verwendet.

Generell sind Treibmittel, insbesondere chemische Treibmittel welche in expandierbaren Formteilen z.B. für den Automobilbau eingesetzt werden anfällig gegenüber Feuchtigkeit. Feuchtigkeit kann das Gasvolumen und die Gasfreisetzung verändern. Als Folge gerät das abgestimmte System aus Polymer und Treibmittel aus dem Gleichgewicht und die gewünschten Expansionsraten werden nicht mehr erreicht. Dies führt zu Undichtigkeiten beim späteren Einsatz am Fahrzeug. Die Exposition der Zusammensetzungen gegenüber Feuchtigkeit tritt insbesondere bei Transport und Lagerung auf, wobei die Anforderungen der Anwender an die Stabilität und Wasserdampfbeständigkeit der Produkte durch die immer globaler werdende Logistikstruktur immer höher werden.

Aufgabe der vorliegenden Erfindung war es daher, thermisch expandierbare Massen zur Verfügung zu stellen, die in gleicher Weise wie die bekannten Massen für die oben beschriebenen Verwendungen geeignet sind aber gleichzeitig eine deutlich verbesserte Wasserdampfbeständigkeit aufweisen.

Diese Aufgabe wird überraschender Weise durch thermisch expandierbare Zusammensetzungen gelöst, die, bezogen auf das Gesamtgewicht der Zusammensetzung,

a) 40,0 bis 98,0 Gew.-% mindestens eines peroxidisch vernetzenden Polymers,
b) 0,05 bis 5 Gew.-% mindestens eines Peroxids,
c) 1,0 bis 15,0 Gew.-% mindestens eines Treibmittels, und
d) 0,1 bis 10 Gew.-% mindestens eines Wachses enthalten,

wobei das mindestens eine peroxidisch vernetzende Polymer einen Schmelzindex (MFI) von 0,3 bis 10 g/10 min aufweist und ausgewählt wird aus Styrol-Butadien-Blockcopolymeren, Styrol-Isopren-Blockcopolymeren, Ethylen-Vinylacetat-Copolymeren, funktionalisierten Ethylen-Vinylacetat-Copolymeren, funktionalisierten Ethylen-Butylacrylat-Copolymeren, Ethylen-Propylen-Dien-Copolymere, Ethylen-Methylacrylat-Copolymeren, Ethylen-Ethylacrylat-Copolymeren, Ethylen-Butylacrylat-Copolymeren, Ethylen-(Meth)acrylsäure-Copolymeren, Ethylen-2-Ethylhexyacrylat-Colpolymeren, und Ethylen-Acrylester-Copolymeren, insbesondere aus Ethylen-Vinylacetat-Copolymeren und funktionalisierten Ethylen-Vinylacetat-Copolymeren.

Entsprechende Zusammensetzungen überwinden die bekannten Nachteile und erfüllen gleichzeitig die an derartige thermisch expandierbare Zusammensetzungen gestellten Anforderungen in einem hohen Maße, vor allem in Hinblick auf eine hervorragende Expansion und eine geringe Wasseraufnahme. Insbesondere wird eine hohe Resistenz gegen Wasserdampf erreicht.

Ein erster Gegenstand der vorliegenden Erfindung sind daher thermisch expandierbare Zusammensetzungen, enthaltend, bezogen auf das Gesamtgewicht der Zusammensetzung,

  a) 40,0 bis 98,0 Gew.-% mindestens eines peroxidisch vernetzenden Polymers,
  b) 0,05 bis 5 Gew.-% mindestens eines Peroxids,
  c) 1,0 bis 15,0 Gew.-% mindestens eines Treibmittels, insbesondere mindestens eines chemischen Treibmittels, und
  d) 0,1 bis 10 Gew.-% mindestens eines Wachses,

wobei das mindestens eine peroxidisch vernetzende Polymer einen Schmelzindex (MFI) von 0,3 bis 10 g/10 min aufweist und ausgewählt wird aus Styrol-Butadien-Blockcopolymeren, Styrol-Isopren-Blockcopolymeren, Ethylen-Vinylacetat-Copolymeren, funktionalisierten Ethylen-Vinylacetat-Copolymeren, funktionalisierten Ethylen-Butylacrylat-Copolymeren, Ethylen-Propylen-Dien-Copolymere, Ethylen-Methylacrylat-Copolymeren, Ethylen-Ethylacrylat-Copolymeren, Ethylen-Butylacrylat-Copolymeren, Ethylen-(Meth)acrylsäure-Copolymeren, Ethylen-2-Ethylhexyacrylat-Colpolymeren, und Ethylen-Acrylester-Copolymeren, insbesondere aus Ethylen-Vinylacetat-Copolymeren und funktionalisierten Ethylen-Vinylacetat-Copolymeren.

Als wesentlichen Bestandteil enthält die thermisch expandierbare Zusammensetzung als Bindemittelsystem mindestens ein peroxidisch vernetzbares Polymer a). Als "peroxidisch vernetzbar" bezeichnet der Fachmann derartige (thermoplastische) Polymere und Elastomere, bei denen durch Einwirkung eines radikalischen Starters ein Wasserstoffatom aus der Haupt- oder einer Nebenkette abstrahiert werden kann, so dass ein Radikal zurückbleibt, das in einem zweiten Reaktionsschritt andere Polymerketten angreift.

Gemäß der vorliegenden Erfindung ist das mindestens eine peroxidisch vernetzbare Polymer a) ausgewählt aus Styrol-Butadien-Blockcopolymeren, Styrol-Isopren-Blockcopolymeren, Ethylen-Vinylacetat-Copolymeren, funktionalisierten Ethylen-Vinylacetat-Copolymeren, funktionalisierten Ethylen-Butylacrylat-Copolymeren, Ethylen-Propylen-Dien-Copolymere, Ethylen-Methylacrylat-Copolymeren, Ethylen-Ethylacrylat-Copolymeren, Ethylen-Butylacrylat-Copolymeren, Ethylen-(Meth)acrylsäure-Copolymeren, Ethylen-2-Ethylhexyacrylat-Colpolymeren, und Ethylen-Acrylester-Copolymeren.

Unter einem funktionalisierten Copolymeren wird dabei erfindungsgemäß ein Copolymer verstanden, das mit zusätzlichen Hydroxidgruppen, Amingruppen, Carboxygruppen, Anhydridgruppen und/oder Acrylatgruppen-Gruppen versehen ist.

Besonders vorteilhaft im Sinne der vorliegenden Erfindung sind Ethylen-Vinylacetat-Copolymere, funktionalisierte Ethylen-Vinylacetat-Copolymere, funktionalisierte Ethylen-Butylacrylat-Copolymere, Ethylen-Propylen-Dien-Copolymere, Styrol-Butadien-Blockcopolymere, Styrol-Isopren-Blockcopolymere, Ethylen-Methylacrylat-Copolymere, Ethylen-Ethylacrylat-Copolymere, Ethylen-Butylacrylat-Copolymere und Ethylen-(Meth)acrylsäure-Copolymere. Ganz besonders bevorzugt sind Ethylen-Vinylacetat-Copolymere und funktionalisierte Ethylen-Vinylacetat-Copolymere, insbesondere Ethylen-Vinylacetat-Copolymere, die keine weiteren Monomereinheiten einpolymerisiert enthalten (reine Ethylen-Vinylacetat-Copolymere).

Thermisch expandierbare Zubereitungen, die mindestens ein Ethylen-Vinylacetat-Copolymer mit einem Vinylacetatanteil von 5 bis 30 Gew.-%, insbesondere von 10 bis 25 Gew.-%, ganz besonders von 15 bis 20 Gew.-%, bezogen auf die Gesamtmasse der Copolymere, enthalten, sind erfindungsgemäß besonders bevorzugt.

Das peroxidisch vernetzbare Polymer a), insbesondere das Ethylen-Vinylacetat-Copolymer, weist erfindungsgemäß einen Schmelzindex (MFI) von 0,3 bis 10 g/10min, insbesondere von 0,5 bis 10 g/10min, noch bevorzugter mit einem Schmelzindex von 1,0 bis 10 g/10min oder von 1,5 bis 8 g/10 min, ganz besonders bevorzugt von 1,5 bis 5 g/10min auf. Es kann erfindungsgemäß vorteilhaft sein, wenn zwei oder mehrere Polymere mit verschiedenen Schmelzindices in den thermisch expandierbaren Zubereitungen eingesetzt werden. Es ist erfindungsgemäß bevorzugt, dass der Anteil weiterer peroxidisch vernetzbarer Polymere, die die obigen Anforderungen nicht erfüllen, in der Zusammensetzung <20 Gew.-%, bevorzugter <15 Gew.-% bezogen auf das Gesamtgewicht ist.

Der Schmelzindex wird hierfür in einem Kapillarrheometer bestimmt, wobei das Polymer bei 190°C in einem beheizbaren Zylinder aufgeschmolzen und unter einem durch die Auflagelast (2,16kg) entstehenden Druck durch eine definierte Düse (Kapillare) gedrückt wird (ASTM D1238). Ermittelt wird die austretende Masse als Funktion der Zeit. Alle hierin angegebenen Schmelzindices sind, sofern nicht anderweitig angegeben, solche die mittels ASTM D1238 bei 190°C und 2,16 kg bestimmt wurden.

In einer bevorzugten Ausführungsform, wie für Niedertemperatur-expandierende Formulierungen, weisen die Polymere a) einen Schmelzpunkt (bestimmbar mittels DSC nach ASTM D3417) unterhalb der Zersetzungstemperatur des Treibmittels auf. Bevorzugt weist das Polymer a) einen Schmelzpunkt unterhalb von 100 °C, bevorzugt zwischen 90 und 60 °C auf.

Die thermisch expandierbaren Zubereitungen enthalten vorzugsweise mindestens 40 Gew.-% und bevorzugt maximal 98 Gew.-%, insbesondere mindestens 50 und maximal 97 Gew.-% mindestens eines peroxidisch vernetzbaren Polymers, vorzugsweise eines Ethylen-Vinylacetat-Copolymers. Thermisch expandierbare Zubereitungen, die 50 bis 95 Gew.-%, insbesondere 60 bis 95 Gew.-%, bevorzugt 70 bis 95 Gew.-% mindestens eines Ethylen-Vinylacetat-Copolymers, jeweils bezogen auf die Gesamtmasse der thermisch expandierbaren Zubereitung enthalten, sind besonders bevorzugt. Die Mindestmenge kann auch bei 55, 65 oder 75 Gew.-% liegen und die Maximalmenge bei 94, 93, 92, 91, 90, 89, 88, 87, 86 oder 85 Gew.-%.

In verschiedenen Ausführungsformen wird als Polymer a) eine Mischung von mindestens zwei Polymeren eingesetzt, wobei das erste Polymer nicht Glycidyl(meth)acrylat als Monomer einpolymerisiert enthält und vorzugsweise aus den vorstehend beschriebenen ausgewählt wird, und das zweite Polymer Glycidyl(meth)acrylat als Monomer einpolymerisiert enthält. Der Ausdruck "(Meth)acrylat", wie hierin verwendet, umfasst jeweils die entsprechenden Acrylate und Methacrylate.

In verschiedenen Ausführungsformen enthalten die thermisch expandierbaren Zusammensetzungen mindestens ein zweites peroxidisch vernetzbares Polymer, welches zu einem Anteil von 2 bis 20 Gew.-%, bezogen auf das jeweilige Polymer, Glycidyl(meth)acrylat als Monomer einpolymerisiert enthält. Der Glycidyl(meth)acrylat-Anteil an diesem Polymer beträgt 2 bis 20 Gew.-%, insbesondere 3 bis 15 Gew.-%, bevorzugt 6 bis 10 Gew.-%, bezogen auf die Gesamtmasse der Copolymere. Dieses zweite peroxidisch vernetzbares Polymer ist von dem ersten peroxidisch vernetzbaren Polymer unterschiedlich und ist zusätzlich enthalten. Bevorzugt enthalten diese Polymere Glycidylmethacrylat. Als solche Polymere eignen sich die oben beschriebenen peroxidisch vernetzbaren Polymere, wobei die Polymere Glycidyl(meth)acrylat als Einheit enthalten. Besonders bevorzugt sind Terpolymere, die neben Glycidyl(meth)acrylat als Einheit bevorzugt Monomere ausgewählt aus der Gruppe von Ethylen, Propylen, Acrylsäureester, wie bevorzugt Methyl(meth)acrylat, Ethyl(meth)acrylat, Propyl(meth)acrylat oder Butyl(meth)acrylat, Styrol und Vinylacetat enthalten. Ganz besonders bevorzugt sind Ethylen/(Meth)Acrylsäure(ester)/Glycidyl(meth)acrylat-Terpolymere, insbesondere Ethylen/Methyl(meth)acrylat/Glycidylmethacrylat und Ethylen/Butyl(meth)acrylat/Glycidylmethacrylat. Weiterhin hat es sich als vorteilhaft erwiesen, wenn der Schmelzindex dieses Polymers, insbesondere des Terpolymers, von 0,3 bis 30 g/10min, insbesondere von 0,5 bis 25 g/10min ist. Polymere, insbesondere Terpolymere, mit einem Schmelzindex von 1,5 bis 25 g/10min, insbesondere von 2 bis 15 g/10 min, sind besonders vorteilhaft.

In einer bevorzugten Ausführungsform, wie für Niedertemperatur-expandierende Formulierungen, weisen diese Polymere, die Glycidyl(meth)acrylat-Monomere einpolymerisiert enthalten, einen Schmelzpunkt (bestimmbar mittels DSC nach ASTM D3417) unterhalb der Zersetzungstemperatur des Treibmittels auf. Bevorzugt weist das Polymer einen Schmelzpunkt unterhalb von 100 °C, bevorzugt zwischen 90 und 60 °C, bevorzugt zwischen 80 und 65 °C auf.

Es kann erfindungsgemäß vorteilhaft sein, wenn zwei oder mehrere, insbesondere zwei verschiedene Polymere, die Glycidyl(meth)acrylat-Monomere einpolymerisiert enthalten, in den thermisch expandierbaren Zubereitungen eingesetzt werden. Vor allem für die Verbesserung der Wasserabsorption können zwei verschiedene Terpolymere von Vorteil sein.

Die thermisch expandierbaren Zubereitungen können in solchen Ausführungsformen vorzugsweise mindestens 2 Gew.-% und bevorzugt maximal 10 Gew.-%, insbesondere maximal 8 Gew.-% mindestens eines Polymers, welches zu einem Anteil von 2 bis 20 Gew.-%, bezogen auf das jeweilige Polymer, Glycidyl(meth)acrylat als Monomer einpolymerisiert enthält, insbesondere mindestens eines Terpolymers, enthalten. Thermisch expandierbare Zubereitungen, die 2 bis 8 Gew.-%, insbesondere 3 bis 7 Gew.-% mindestens eines peroxidisch vernetzbaren Polymers, das Glycidyl(meth)acrylat als Monomer einpolymerisiert enthält, jeweils bezogen auf die Gesamtmasse der thermisch expandierbaren Zubereitung enthalten, sind besonders bevorzugt.

Dabei enthalten die Zubereitungen zusätzlich vorzugsweise mindestens ein Ethylen-Vinylacetat-Copolymer in den oben angegeben Mengen.

Als weiterer Bestandteil neben den vorstehend beschriebenen peroxidisch vernetzbaren Polymeren können die thermisch expandierbaren Zubereitungen vorzugsweise mindestens ein niedermolekulares multifunktionelles Acrylat enthalten.

Unter einem "niedermolekularen multifunktionellen Acrylat" wird eine Verbindung verstanden, die mindestens zwei Acrylatgruppen aufweist und ein Molgewicht unterhalb von 2400g/mol, vorzugsweise unterhalb von 800g/mol, aufweist. Als vorteilhaft haben sich insbesondere derartige Verbindungen erwiesen, die zwei, drei oder mehr Acrylatgruppen pro Molekül aufweisen.

Bevorzugte difunktionelle Acrylate sind Ethylenglycol-Dimethacrylat, Diethylenglycol- Dimethacrylat, Triethlenglycol-Dimethacrylat, Triethlenglycol-Diacrylat, Tripropyleneglycol-Dimethacrylat, 1,4-Butandiol-Dimethacrylat, 1,3-Butylenglycol-Dimethacrylat, 1,3-Butandiol-Dimethacrylat, Tricyclodecandimethanol-Dimethacrylat, 1,10-Dodecandiol-Dimethacrylat, 1,6-Hexandiol-Dimethacrylat, 2-Methyl-1,8-octandiol-Dimethacrylat, 1,9-Nonandiol-Dimethacrylat, Neopentylglycol-Dimethacrylat und Polybutylenglycol-Dimethacrylat.

Bevorzugte niedermolekulare Acrylate mit drei oder mehr Acrylatgruppen sind Glycerintriacrylat, Dipentaerythritol-Hexaacrylat, Pentaerythritol-Triacrylat (TMM), Tetramethylolmethan- Tetraacrylat (TMMT), Trimethylolpropan-Triacrylat (TMPTA), Pentaerythritol-Trimethacrylat, Di-(Trimethylolpropan)-Tetraacrylat (TMPA), Pentaerythritol-Tetraacrylat, TrimethylolpropanTrimethacrylat (TMPTMA), Tri(2-acryloxyethyl)isocyanurat und Tri(2- methacryloxyethyl)trimellitat sowie deren ethoxylierten und propoxylierten Derivate mit einem Gehalt von maximal 35-EO-Einheiten und/oder maximal 20-PO-Einheiten.

Thermisch expandierbare Zubereitungen die ein oder mehrere niedermolekulare multifunktionelle Acrylate ausgewählt aus Triethylenglykoldiacrylat, Triethlenglycol-Dimethacrylat, Tricyclodecandimethanol-Dimethacrylat (TCDDA), Trimethylolpropantriacrylat (TMPTA) und Trimethylolpropantrimethacrylat (TMPTMA), Pentaerythritol-Triacrylat (TMM), Tetramethylolmethan-Tetraacrylat (TMMT), Pentaerythritol-Trimethacrylat, Di-(Trimethylolpropan)-Tetraacrylat (TMPA) und Pentaerythritol-Tetraacrylat enthalten, sind erfindungsgemäß besonders bevorzugt. Ganz besonders bevorzugt sind solche, die TCDDA und/oder TMPTA, insbesondere beide, enthalten.

Neben den niedermolekularen Acrylaten können die thermisch expandierbaren Zubereitungen weitere Co-Vernetzer, wie beispielsweise Allylverbindungen, wie Triallyl-cyanurat, Triallylisocyanurat, Triallyl-trimesat, Triallyl-trimellitat (TATM), Tetraallyl-pyromellitat, den Diallylester von 1,1,3-Trimethyl-5-carboxy-3-(4-carboxyphenyl)inden, Trimethylolpropan-trimellitat (TMPTM) oder Phenylen-dimaleimide enthalten.

Die Co-Vernetzer, bevorzugt die niedermolekularen multifunktionellen Acrylate, sind in den thermisch expandierbaren Zubereitungen vorzugsweise in einer Menge von 0,2 bis 2,5 Gew.-%, insbesondere von 0,4 bis 1,4 Gew.-%, jeweils bezogen auf die Gesamtmasse der thermisch expandierbaren Zubereitung enthalten.

Als Härtersystem für die peroxidisch vernetzbares Polymere enthalten die thermisch expandierbaren Zubereitungen mindestens ein Peroxid b). Insbesondere sind die organischen Peroxide geeignet, wie beispielsweise Ketonperoxide, Diacylperoxide, Perester, Perketale und Hydroperoxide bevorzugt. Besonders bevorzugt sind beispielsweise Cumenhydroperoxid, t-Butylperoxid, Bis(tert-butylperoxy)-diisopropylbenzol, Di(tert-butylperoxyisopropyl)benzol, Dicumylperoxid, t-Butylperoxybenzoat, Di-alkylperoxydicarbonat, Diperoxyketale (z.B. 1,1-Di-tert-butylperoxy-3,3,5-trimethylcyclohexan), Ketonperoxide (z.B. Methylethylketon-Peroxide), 4,4- Di-tert-butylperoxy-n-butyl-valerate und Trioxepane (z.B. 3,3,5,7,7-Pentamethyl-1,2,4-trioxepan).

Besonders bevorzugt sind die beispielsweise kommerziell von der Firma Akzo Nobel bzw. Pergan vertriebenen Peroxide, wie 3,3,5,7,7-Pentamethyl-1,2,4-trioxepan, 2,5-Dimethyl-2,5-di(tert.-butylperoxy)hexan, Di-tert.-butylperoxid, 2,5-Dimethyl-2,5-di(tert.-butylperoxy)hexan, tert.-Butylcumylperoxid, Di-(2-tert.-butylperoxyisopropyl)benzol, Dicumylperoxid, Butyl-4,4-di(tert.-butylperoxi)valerat, tert-Butylperoxy-2-ethylhexylcarbonat, 1,1-Di-(tert.-butylperoxy)-3,3,5-trimethylcyclohexan, tert.-Butylperoxybenzoat, Di-(4-methylbenzoyl)peroxid und Dibenzoylperoxid.

Es hat sich weiterhin als vorteilhaft erwiesen, wenn die eingesetzten Peroxide bei Raumtemperatur im Wesentlichen inert sind und erst bei Erhitzung auf höhere Temperaturen aktiviert werden (beispielsweise bei Erhitzung auf Temperaturen zwischen 130°C und 240°C). Besonders vorteilhaft ist es, wenn das eingesetzte Peroxid bei 65°C eine Halbwertszeit von mehr als 60 Minuten aufweist, das heißt, dass nach einer Erhitzung der thermisch expandierbaren Zubereitung enthaltend das Peroxid auf 65°C für 60 Minuten sich weniger als die Hälfte des eingesetzten Peroxids zersetzt hat. Erfindungsgemäß können solche Peroxide besonders bevorzugt sein, die bei 115°C, insbesondere 130°C eine Halbwertszeit von 60 Minuten aufweisen.

Besonders bevorzugt ist mindestens ein Peroxid ausgewählt aus der Gruppe aus Di(tert.-butylperoxyisopropyl)benzol, Dicumylperoxid, 1,1-Di-(tert.-butylperoxy)-3,3,5-trimethylcyclohexan, 2,5-Dimethyl-2,5-di(tert.-butylperoxy)hexan, Dibenzoylperoxid und Di-tert.-butyl- 1,1,4,4-tetramethylbut-2-in-1,4-ylendiperoxid enthalten.

Ferner ist es erfindungsgemäß vorteilhaft, wenn mindestens ein oder die Peroxide in einer auf einen festen inerten Träger, wie beispielsweise Calciumcarbonat und/oder Silica und/oder Kaolin, aufgebrachten Form eingesetzt werden.

Vorzugsweise wird das Peroxid so ausgewählt, dass die Vernetzungstemperatur T90 unterhalb, vorzugsweise mindestens 15 - 35 °C unterhalb der Zersetzungstemperatur der enthaltenen Treibmittel liegt. Dadurch werden eine hohe Gasausbeute und damit eine hohe Expansion des Materials begünstigt. Die Vernetzungstemperatur T90 definiert sich als die Temperatur, bei der eine 90%ige Vernetzung des Materials innerhalb von 12 Minuten erreicht wird. Die Zersetzungstemperatur des Treibmittels gibt die Temperatur an, bei der sich das Treibmittel beginnt zu zersetzen, welche auch als Aktivierungstemperatur bezeichnet werden kann. Die Vernetzungstemperatur T90 und der Vernetzungsgrad können mittels einer Rheometermessung bestimmt werden, wie mit einem Monsanto-Rheometer 100 S (Prinzip oszillierende Scheibe bei einem Auslenkwinkel von 3°, ca. 15 cm$^3$ Kammervolumen) nach DIN 53529.

Das mindestens eine oder die Peroxide sind in den erfindungsgemäßen thermisch expandierbaren Zubereitungen in einer Menge von 0,05 bis 5 Gew.-%, bevorzugt in einer Menge von 0,1 bis 3 Gew.-%, insbesondere in einer Menge von 0,2 bis 2 Gew.-% oder 0,3 bis 1 Gew.-%, jeweils bestimmt als Aktivsubstanzgehalt an Peroxid bezogen auf die Gesamtmasse der thermisch expandierbaren Zubereitung, enthalten.

Als Treibmittel c) können die bekannte Treibmittel eingesetzt werden, insbesondere vorteilhaft werden chemische Treibmittel für derartige Zusammensetzungen verwendet, insbesondere die bereits oben genannten exothermen Treibmittel, wie beispielsweise ADCA (Azodicarbonamid), OBSH (4,4'-Oxybis(benzolsulfonylhydrazid)), DNPT (Dinitrosopentamethylentetramin), PTSS (p-Toluolsemicarbazid), BSH (Benzol-4-sulfonohydrazid), TSH (Toluol-4-sulfonohydrazid), 5-PT (5-Phenyltetrazol) und ähnliche.

Alternativ können auch endotherme chemische Treibmittel verwendet werden, wie sie beispielsweise in den internationalen Patentveröffentlichungen WO 2017/055330, WO 2017/055329, WO 2017/108809 und WO 2018/234368 beschrieben werden.

Unter einem chemischen Treibmittel werden erfindungsgemäß Verbindungen verstanden, die sich bei Einwirkung von Wärme zersetzen und dabei Gase freisetzen.

Die Treibmittel können ferner weitere Zusatzstoffe enthalten, wie insbesondere Calciumoxid, Zeolithe, Zinkoxid und/oder Magnesiumoxid.

In verschiedenen Ausführungsformen enthalten die thermisch expandierbaren Zusammensetzungen das Treibmittel in einer Menge von 1,0 bis 15,0 Gew.-%, bevorzugt 1,5 bis 12,0 Gew.-%, bevorzugt 2,0 bis 10,0 Gew.-% bezogen auf die Gesamtzusammensetzung. Dabei beziehen sich die Gew.-%, soweit nicht anders beschreiben, auf die Gesamtzusammensetzung vor der Expansion.

Die thermisch expandierbaren Zubereitungen enthalten, in verschiedenen Ausführungsformen, ADCA (Azodicarbonamid) und/oder OBSH als Treibmittel.

Schließlich enthalten die thermisch expandierbaren Zusammensetzungen auch mindestens ein Wachs d).

Geeignete Wachse schließen ein, ohne darauf beschränkt zu sein, paraffinische Wachse mit Schmelztemperaturen im Bereich von 45 bis 70°C, mikrokristalline Wachse mit Schmelztemperaturen im Bereich von 60 bis 95°C, synthetische Fischer-Tropsch Wachse mit Schmelztemperaturen (Verfestigungspunkten) im Bereich von 90 bis 115°C sowie Polyethylenwachse mit Schmelztemperaturen zwischen 85 und 140°C.

Geeignete Paraffinwachse sind beispielsweise solche die von Sasol unter den Produktnamen SASOLWAX 5603, 6203 und 6805 erhältlich sind.

Ein Beispiel für ein geeignetes mikrokristalline Wachs ist Sasolwax 3971 von Sasol.

Beispielhafte Polyethylenwachse schließen Ethylenhomopolymere, wie sie beispielsweise von Backer Petrolite Corp. als POLYWAX™ 500, POLYWAX™ 1500 and POLYWAX™ 2000 erhältlich sind ein.

Besonders geeignet für die Zusammensetzungen der Erfindung sind allerdings Fischer-Tropsch Wachse mit Verfestigungspunkten im Bereich von 90 bis 105°C, insbesondere 95 bis 105 °C, und Tropfpunkten im Bereich von 110° bis 120°C (nach DGF M-III 3). Derartige Wachse sind beispielsweise von der Firma Deurex erhältlich, beispielsweise als Deurex® T 39 (z.B. T 39 G).

In verschiedenen Ausführungsformen enthalten die thermisch expandierbaren Zusammensetzungen das Wachs in einer Menge von 0,1 bis 10,0 Gew.-%, bevorzugt 0,4 bis 8,0 Gew.-%, bevorzugt 0,8 bis 9,0 Gew.-%, noch bevorzugter 1,0 bis 8,0 Gew.-% bezogen auf die Gesamtzusammensetzung.

Neben den oben genannten Bestandteilen können die thermisch expandierbaren Massen noch weitere übliche Komponenten, wie beispielsweise Füllstoffe, Weichmacher, Reaktivverdünner, Rheologie-Hilfsmittel, Netzmittel, Haftvermittler, Alterungsschutzmittel, Stabilisatoren und/oder Farbpigmente enthalten. Diese weiteren Komponenten sind typischerweise in Mengen von insgesamt 0,01 bis 60, üblicherweise bis 15 Gew.-%, vorzugsweise 0,1 bis 10 Gew.-% oder 0,5 bis 10 Gew.-% in der Zusammensetzung enthalten.

Beispiele für geeignete Weichmacher sind Alkylester zweibasiger Säuren (z. B. Phthalat-Ester, Adipinsäurepolyester), technische Weiß- und Prozessöle (Paraffine), Diarylether, Benzoate von Polyalkylenglykolen, Citronensäureester (z.B. Citronensäuretriethylester), organische Phosphate und Alkylsulfonsäureester von Phenol oder Kresol.

Als Füllstoffe kommen beispielsweise die diversen gemahlenen oder gefällten Kreiden, Calcium-Magnesiumcarbonate, Talkum, Graphit, Schwerspat, Kieselsäuren oder Silica sowie insbesondere silikatische Füllstoffe, wie beispielsweise Glimmer, etwa in Form von Chlorit, oder silikatische Füllstoffe vom Typ des Aluminium-Magnesium-Calcium-Silicats, z. B. Wollastonit, in Frage. Talkum ist ein besonders bevorzugter Füllstoff. Bevorzugt sind die Füllstoffe beschichtet, vorzugsweise mit Stearinsäure oder Stearaten. Dadurch wird das Rieselverhalten positiv beeinflusst.

Die Füllstoffe werden vorzugsweise in einer Menge von 0 bis 60 Gew.-%, insbesondere von 0 bis 15 Gew.-%, bevorzugt 2 bis 10 Gew.-%, besonders bevorzugt 3 bis 8 Gew.-% jeweils bezogen auf die Masse der gesamten thermisch expandierbaren Zusammensetzung eingesetzt.

Farbgebende Komponenten, insbesondere schwarze Farbstoffe auf Basis von Graphit und/oder Ruß, sind in den erfindungsgemäßen thermisch expandierbaren Zusammensetzungen vorzugsweise in einer Menge von 0 bis 2 Gew.-%, insbesondere von 0,1 bis 0,8 Gew.-%, ganz besonders bevorzugt 0,15 bis 0,5 Gew.-%, jeweils bezogen auf die Masse der gesamten thermisch expandierbaren Zusammensetzung enthalten.

Als Antioxidantien oder Stabilisatoren können beispielsweise sterisch gehinderte Phenole bzw. Mischungen davon und/oder sterisch gehinderte Thioether und/oder sterisch gehinderte aromatische Amine, Diphosphonite, Disulfide eingesetzt werden, wie beispielsweise Bis-(3,3-bis-(4'-hydroxy-3-tert. butylphenyl) butansäure)-glykolester oder auch 4-Methylphenol, Reaktionsprodukt mit Dicyclopentadien und Isobutylen (Wingstay L).

Antioxidantien oder Stabilisatoren sind in den erfindungsgemäßen thermisch expandierbaren Zusammensetzungen vorzugsweise in einer Menge von 0 bis 5 Gew.-%, insbesondere von 0,1 bis 2 Gew.-%, bevorzugt von 0,1 bis 0,5 Gew.-%, jeweils bezogen auf die Masse der gesamten thermisch expandierbaren Zusammensetzung enthalten.

Trockenmittel wie Calciumoxid und/oder Zeolithe sind in den erfindungsgemäßen thermisch expandierbaren Zusammensetzungen vorzugsweise in einer Menge von 0 - 5 Gew.-%, insbesondere von 0,1 bis 2,5 Gew.-%, jeweils bezogen auf die Masse der gesamten thermisch expandierbaren Zusammensetzung enthalten.

Die erfindungsgemäßen thermisch expandierbaren Zusammensetzungen sind vorzugsweise derart formuliert, dass sie bei 22°C fest sind. Eine thermisch expandierbare Zusammensetzung wird erfindungsgemäß als "fest" bezeichnet, wenn die Geometrie dieser Zusammensetzung sich bei der angegebenen Temperatur innerhalb von 1 Stunde, insbesondere innerhalb von 24 Stunden, nicht unter dem Einfluss der Schwerkraft verformt.

Die erfindungsgemäßen thermisch expandierbaren Zusammensetzungen können durch Mischung der ausgewählten Komponenten in einem beliebigen, geeigneten Mischer, wie beispielsweise einem Kneter, einem Doppel-Z-Kneter, einem Innenmischer, einem Doppelschneckenmischer, einem kontinuierlichen Mischer oder einem Extruder, insbesondere einem Doppelschneckenextruder, hergestellt werden.

Obwohl es vorteilhaft sein kann die Komponenten etwas zu erhitzen, um die Erreichung einer homogenen, einheitlichen Masse zu erleichtern, muss dafür Sorge getragen werden, dass keine Temperaturen erreicht werden, die eine Aktivierung der Härter, der Beschleuniger und/oder des Treibmittels bewirken. Die resultierende thermisch expandierbare Zusammensetzung kann unmittelbar nach ihrer Herstellung in Form gebracht werden, beispielsweise durch Blasformen, Pelletierung, Spritzgussverfahren, Formpressverfahren, Stanzverfahren oder Extrusion.

In einer besonders bevorzugten Ausführungsform werden das Treibmittel c) und vorzugsweise auch das Wachs d) und das Peroxid b) als "Masterbatch" in die thermisch expandierbare Zusammensetzung eingebracht. Unter dem Masterbatch versteht man eine Vormischung des zu verwendenden Treibmittels z.B. mit einem Polymer, beispielsweise dem eingesetzten Polymer a) oder einem anderen Polymer. In verschiedenen Ausführungsformen kann dieses Polymer die oben beschriebenen Acrylate umfassen, insbesondere das Polymer, welches Glycidyl(meth)acrylat als Monomer einpolymerisiert enthält, und/oder die niedermolekularen multifunktionellen Acrylate. Zusätzlich kann dieser Masterbatch auch ein EVA Copolymer enthalten, welches einen höheren Schmelzindex als für das Polymer a) angegeben aufweist, beispielsweise im Bereich von >100 g/10min, beispielsweise 400-600g/10 min. Solche EVA Copolymere können Mengen von bis zu 30 Gew.-% Vinylacetat-Monomer enthalten.

Ein derartiger (reaktiver) Masterbatch wird dann mit dem Basispolymer a) kombiniert/gemischt. Typische Gewichtsverhältnisse von Masterbatch:Basispolymer liegen im Bereich 40:60 bis 5:95, beispielsweise 25:75 oder 20:80 bis 8:92.

Neben den prozessualen Vorteilen hat diese Vorgehensweise den Vorteil, dass das Treibmittel besonders homogen und schonend verteilt werden kann und dabei weniger Hitze durch das Kneten/Mischen entsteht. Das Treibmittel kann so vor einer ungewollten Zersetzung geschützt werden. Besonders bevorzugt ist ein Masterbatch, welches das mindestens eine Treibmittel c), das mindestens eine Peroxid b), das mindestens eine Wachs d), und optional einen Teil des peroxidisch vernetzbaren Polymers a), insbesondere die oben erwähnten Acrylatkomponenten ggf. in Kombination mit einem EVA Copolymer mit höherem Schmelzindex, enthält. Daneben kann der Masterbatch auch weitere Komponenten enthalten, wie Talkum und/oder Antioxidantien.

Die Expansion der thermisch expandierbaren Zusammensetzung erfolgt durch Erhitzung, wobei die Zusammensetzung für eine bestimmte Zeit auf eine bestimmte Temperatur erhitzt wird, die ausreichend ist, um die Aktivierung des Treibmittels zu bewirken. In Abhängigkeit von den Bestandteilen der Zusammensetzung und den Bedingungen der Fertigungslinie liegen derartige Temperaturen üblicherweise im Bereich von 110°C bis 240°C, vorzugsweise 120°C bis 210°C, mit einer Verweilzeit von 10 bis 90 Minuten, vorzugsweise von 5 bis 60 Minuten.

Im Bereich des Fahrzeugbaus ist es besonders vorteilhaft, wenn die Expansion der erfindungsgemäßen Zusammensetzungen während der Passage des Fahrzeugs durch den Ofen zur Aushärtung der kathodischen Tauchlackierung erfolgt, so dass auf einen separaten Erhitzungsschritt verzichtet werden kann.

Die thermisch expandierbaren Zusammensetzungen der vorliegenden Erfindung können in einem weiten Bereich von Stütz-, Füll-, Dichtungs- und Klebstoffapplikationen zum Einsatz kommen, beispielsweise im Bereich der Schottteile zur Abdichtung von Hohlräumen in Fahrzeugen. Aber auch ein Einsatz als Unterfütterungsklebstoff, beispielsweise im Tür- oder Dachbereich ist denkbar. Für einen derartigen Einsatzzweck können die erfindungsgemäßen thermisch expandierbaren Zusammensetzungen mittels Direktextrusion appliziert werden. Die Zusammensetzungen können aber auch in extrudierter Form an den Anwendungsort gebracht werden und dort durch Erwärmen des Stahls aufgepresst und angeschmolzen werden. Als dritte Alternative ist auch das Aufbringen als Co-Extrudat denkbar. Bei dieser Ausführungsform wird erfindungsgemäß unter das eigentliche nicht klebrige Formteil aus der erfindungsgemäßen thermisch expandierbaren Zusammensetzung eine zweite klebrige Zusammensetzung in einer dünnen Schicht aufgebracht. Diese zweite klebrige Schicht dient im Rahmen dieser Ausführungsform dazu, das Formteil im Rohbau zu fixieren.

Die thermisch expandierbaren Zusammensetzungen sind dementsprechend besonders für die Herstellung von Formkörpern, insbesondere Schotteilen zur Hohlraumabdichtung geeignet, d.h. zur Herstellung von Teilen, die in die Hohlräume von Fahrzeugen eingesetzt werden, anschließend durch Erhitzung expandieren, gleichzeitig aushärten und auf diese Weise den Hohlraum bestimmungsgemäß bzw. möglichst vollständig abdichten.

Ein zweiter Gegenstand der vorliegenden Erfindung ist dementsprechend ein Formkörper, der eine erfindungsgemäße thermisch expandierbare Zusammensetzung aufweist. Dabei kann es sich beispielsweise um ein Schottteil zum Abdichten von Hohlräumen eines Bauteils, das eine Form aufweist, die an den Hohlraum angepasst ist, handeln.

Unter einer "Form, die an den Hohlraum angepasst ist" werden dabei erfindungsgemäß alle Geometrien von Schottteilen verstanden, die nach der Expansion eine bestimmungsgemäße bzw. vollständige Abdichtung des Hohlraums sicherstellen. Dabei kann die Form des Schottteils individuell der Form des Hohlraums nachempfunden sein und entsprechende Spitzen und/oder Rundungen aufweisen; im Falle der erfindungsgemäßen thermisch expandierbaren Zusammensetzungen mit hohen Expansionsgraden, kann aber auch das Einbringen einer entsprechend großen Menge in variabler Form, beispielsweise in Form einer Raupe oder eines abgelängten Strangs des Materials, in den Hohlraum ausreichen, um nach der Expansion eine bestimmungsgemäße bzw. vollständige Abdichtung des Hohlraums zu gewährleisten.

Derartige Schottteile werden aus den erfindungsgemäßen thermisch expandierbaren Zusammensetzungen üblicherweise durch Spritzgusstechniken hergestellt. Dabei werden die thermisch expandierbaren Zusammensetzungen auf Temperaturen im Bereich von 70 bis 120°C erhitzt und dann in eine entsprechend ausgebildete Form injiziert.

Die erfindungsgemäßen Formkörper können in allen Produkten zum Einsatz kommen, die Hohlräume aufweisen. Dies sind neben den Fahrzeugen beispielsweise auch Flugzeuge, Schienenfahrzeuge, Haushaltsgeräte, Möbel, Gebäude, Wände, Abtrennungen oder auch Boote.

Ein weiterer Gegenstand der vorliegenden Erfindung ist ein Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung der hierin beschriebenen Zusammensetzungen und Formkörper. Vorzugsweise ist das Verfahren ein Verfahren zur Abdichtung von Hohlräumen eines Bauteils, wobei ein erfindungsgemäßes Schottteil in den Hohlraum eingebracht wird und anschließend auf eine Temperatur oberhalb von 130°C erhitzt wird, so dass die thermisch expandierbare Zusammensetzung expandiert und den Hohlraum abdichtet.

Ein weiterer Gegenstand der vorliegenden Erfindung ist die Verwendung eines erfindungsgemäßen Formkörpers oder Schotteils zur akustischen Abdichtung von Hohlräumen in Bauteilen und/oder zur Abdichtung von Hohlräumen in Bauteilen gegen Wasser und/oder Feuchtigkeit.

Noch ein weiterer Gegenstand der vorliegenden Erfindung ist die Verwendung eines erfindungsgemäßen Formkörpers zum Verstärken oder Versteifen von Bauteilen, insbesondere hohlen Bauteilen.

Die nachfolgenden Beispiele sollen die Erfindung näher erläutern, wobei die Auswahl der Beispiele keine Beschränkung des Umfanges des Erfindungsgegenstandes darstellen soll. Bei den Zusammensetzungen sind alle Mengenangaben Gewichtsteile, wenn nicht anders angegeben.

Ausführungsbeispiele

Allgemeine Versuchsdurchführung / Herstellung der Formulierungen:

Zur Herstellung der erfindungsgemäßen thermisch expandierbaren Zubereitungen wurde alle reaktiven Komponenten z.B. Treibmittel, Peroxide, Aktivatoren und Antioxidantien sowie das Wachs, Füllstoffe bei unter 70°C als Masterbatch zu dem EVA Basispolymer zugegeben und langsam untergeknetet bis die Zubereitung homogen gemischt war. Der Masterbatch enthielt ferner das Glycidylacrylat-haltige Terpolymer, die multifunktionellen Acrylate und ein EVA-Copolymer mit einem Schmelzindex im Bereich von 400 -600g/10 min.

Bestimmung der Expansion

Zur Bestimmung der Expansion wurden aus den gefertigten Platten der Beispielformulierungen Prüfkörper mit den Dimensionen ca. 20mm x 20mm x 3mm geschnitten, diese in einen Umluftofen eingeführt, dieser auf 175 °C erhitzt (Aufheizzeit ca. 7 bis 10 min) und die Prüfkörper dann für den in den Tabellen genannten Zeitraum bei dieser Temperatur belassen (Aufheizzeit inklusive). Die Expansion bei 175°C entspricht dabei den mittleren Bedingungen, die im Rahmen der Aushärtung im Fahrzeugbau erzielt werden.

Das Ausmaß der Expansion [%] wurde mittels der Wasserverdrängungsmethode nach der Formel

$$Expansion = \frac{(m2 - m1)}{m1} \times 100$$

m1 = Masse des Prüfkörpers im Originalzustand in deionisiertem Wasser
m2 = Masse des Prüfkörpers nach Einbrand in deionisiertem Wasser

ermittelt.

Bestimmung der Wasserdampfbeständigkeit

Zur Bestimmung der Wasserdampfbeständigkeit wurden die Zusammensetzungen vor der Expansion bei 40°C und 98% relativer Luftfeuchtigkeit für bis zu 34 Tage gelagert und dann die Expansion nach unterschiedlichen Lagerzeiten bestimmt.

Tabelle 1: Beispielformulierungen (alle Mengen in Gew.-Teilen)

| Stoffbezeichnung /-gruppe (generische Namen) | V1 | V2 | E1 | E2 | E3 | E4 | E5 | E6 |
|---|---|---|---|---|---|---|---|---|
| EVA-Polymer 1 | 80,0 | 80,0 | 92,0 | 80,0 | 80,0 | 80,0 | 80,0 | 60,0 |
| Peroxid | 1,00 | 0,50 | 0,40 | 0,50 | 0,50 | 0,50 | 0,50 | 2,00 |
| Treibmittel | 4,80 | 4,90 | 1,92 | 4,90 | 4,90 | 4,90 | 4,90 | 9,60 |
| Wachs | 0 | 0 | 0,72 | 3,59 | 5,00 | 2,50 | 1,00 | 3,58 |
| EVA Polymer 2 | 2,56 | 4,56 | 1,02 | 4,56 | 4,56 | 4,56 | 4,56 | 5,12 |
| Terpolymer | 4,97 | 4,97 | 1,99 | 4,97 | 4,97 | 4,97 | 4,97 | 9,93 |
| Co-Vernetzer 1 | 0,10 | 0,05 | 0,04 | 0,05 | 0,05 | 0,10 | 0,05 | 0,20 |
| Co-Vernetzer 2 | 0,03 | 0,03 | 0,01 | 0,03 | 0,03 | 0,03 | 0,03 | 0,06 |
| Zinkoxid | 0,90 | 0,90 | 0,36 | 0,90 | 0,90 | 0,90 | 0,90 | 1,80 |
| Antioxidans | 0,30 | 0,30 | 0,12 | 0,30 | 0,30 | 0,30 | 0,30 | 0,60 |
| Talkum | 3,35 | 0 | 1,34 | 0 | 0 | 0 | 0 | 6,71 |
| Farbstoff | 0,20 | 0,20 | 0,08 | 0,20 | 0,20 | 0,20 | 0,20 | 0,40 |
| **SUMME** | 98,21 | 96,41 | 100 | 100 | 101,41 | 98,96 | 97,41 | 100 |
| | | | | | | | | |
| **Veränderung Expansion in % (nach Lagerung gegenüber Tag 0)** | | | | | | | | |
| | | | | | | | | |
| Tag 3 | -6,6 | -6,3 | -1,3 | -0,2 | -0,1 | -0,2 | -0,9 | -0,2 |
| Tag 4 | -13,1 | -11,8 | -4,7 | -0,2 | -0,1 | -0,3 | -1,3 | -0,2 |
| Tag 5 | -35,8 | -30,8 | -9,3 | -0,4 | -0,2 | -1,0 | -1,8 | -0,8 |
| Tag 6 | -56,9 | -51,8 | -15,9 | -1,1 | -0,4 | -1,1 | -2,5 | -1,0 |
| Tag 7 | -100,0 | -100,0 | -33,8 | -1,4 | -0,7 | -2,4 | -3,3 | -1,8 |
| Tag 10 | -100,0 | -100,0 | -100,0 | -1,6 | -0,9 | -2,4 | -6,9 | -1,9 |
| Tag 17 | -100,0 | -100,0 | -100,0 | -1,7 | -1,2 | -2,5 | -10,0 | -2,2 |
| Tag 34 | -100,0 | -100,0 | -100,0 | -13,5 | -1,6 | -10,6 | -19,7 | -7,6 |
| E1 bis E6 sind erfindungsgemäß, V1 und V2 sind Vergleichsformulierungen. | | | | | | | | |

**Tabelle 2: Eingesetzte Komponenten:**

| EVA Polymer 1 | | EVA, 18 %VA-Gehalt, Schmelzpunkt 84-86 °C, MFI 1,7 g/10min (ASTM D1238; 190 °C, 2.16 kg)) |
|---|---|---|
| | | |
| Masterbatch | Peroxid | Dicumylperoxid (Aktivstoff 38-42 Gew.-%) |
| | Treibmittel | Azodicarbonamid (ADCA) |
| | Wachs | Fischer-Tropsch Wachs, Verfestigungspunkt 100°C, Tropfpunkt: Minimum 110°C, Maximum 120°C (bestimmt nach DGF M-III 3) |
| | EVA Polymer 2 | EVA, 27-29 %VA, MFI 400-600 g/10min (ASTM D1238; 190 °C, 2.16 kg)) |
| | Terpolymer | Ethylen-Acrylsäureester- Glycidylmethacrylat Terpolymer, Methylacrylatgehalt 24 Gew.%, Glycidylmethacrylatgehalt 8 Gew.%, Schmelzpunkt 65 °C, MFI 6 g/10min (ASTM D1238; 190 °C, 2.16 kg) |
| | Co-Vernetzer 1 | Trimethylolpropantriacrylat (TMPTA) |
| | Co-Vernetzer 2 | Tricyclodecandimethanoldiacrylat (TCDDA) |
| | Zinkoxid | Zinkoxid |
| | Antioxidans | Bis[3,3-bis-(4'-hydroxy-3'-tert-butylphenyl)butansäure]-glycol ester, Molekulargewicht 794 g/mol, Schmelzpunkt 167-171 °C |
| | Talkum | Talkum |
| | Farbstoff | Farbstoffkonzentrat |

**Patentansprüche**

1. Thermisch expandierbare Zusammensetzung, enthaltend bezogen auf das Gesamtgewicht der Zusammensetzung,

   a) 40,0 bis 98,0 Gew.-% mindestens eines peroxidisch vernetzenden Polymers,
   b) 0,05 bis 5 Gew.-% mindestens eines Peroxids,
   c) 1,0 bis 15,0 Gew.-% mindestens eines Treibmittels, und
   d) 0,1 bis 10 Gew.-% mindestens eines Wachses,

   wobei das mindestens eine peroxidisch vernetzende Polymer einen Schmelzindex (MFI) von 0,3 bis 10 g/10 min aufweist und ausgewählt wird aus Styrol-Butadien-Blockcopolymeren, Styrol-Isopren-Blockcopolymeren, Ethylen-Vinylacetat-Copolymeren, funktionalisierten Ethylen-Vinylacetat-Copolymeren, funktionalisierten Ethylen-Butylacrylat-Copolymeren, Ethylen-Propylen-Dien-Copolymere, Ethylen-Methylacrylat-Copolymeren, Ethylen-Ethylacrylat-Copolymeren, Ethylen-Butylacrylat-Copolymeren, Ethylen-(Meth)acrylsäure-Copolymeren, Ethylen-2-Ethylhexyacrylat-Colpolymeren, und Ethylen-Acrylester-Copolymeren, insbesondere aus Ethylen-Vinylacetat-Copolymeren und funktionalisierten Ethylen-Vinylacetat-Copolymeren.

2. Thermisch expandierbare Zusammensetzung nach Anspruch 1, **dadurch gekennzeichnet, dass** das mindestens eine peroxidisch vernetzende Polymer a) ein Ethylen-Vinylacteat-Copolymer ist.

3. Thermisch expandierbare Zusammensetzung nach Anspruch 1 oder 2, **dadurch gekennzeichnet, dass** das mindestens eine Peroxid ausgewählt wird aus Di(tert.-butylperoxyisopropyl)benzol, Dicumylperoxid, 1,1-Di-(tert.-butylperoxy)-3,3,5-trimethylcyclohexan, 2,5-Dimethyl-2,5-di(tert.-butylperoxy)hexan, Dibenzoylperoxid und Di-tert.-butyl- 1,1,4,4-tetramethylbut-2-in-1,4-ylendiperoxid.

4. Thermisch expandierbare Zusammensetzung nach einem der Ansprüche 1 bis 3, **dadurch gekennzeichnet, dass** das mindestens eine Treibmittel ein chemisches Treibmittel ist, insbesondere ein exothermes Treibmittel ist, vorzugsweise ausgewählt aus ADCA (Azodicarbonamid), OBSH (4,4'-Oxybis(benzolsulfonylhydrazid)) und Kombinationen davon.

**5.** Thermisch expandierbare Zusammensetzung nach einem der Ansprüche 1 bis 4, **dadurch gekennzeichnet, dass** das mindestens eine Wachs ein paraffinisches Wachs mit einer Schmelztemperatur im Bereich von 45 bis 70°C, ein mikrokristallines Wachs mit einer Schmelztemperatur im Bereich von 60 bis 95°C, ein synthetisches Fischer-Tropsch Wachs mit einer Schmelztemperatur (Verfestigungspunkt) im Bereich von 90 bis 115°C oder ein Polyethylenwachs mit einer Schmelztemperatur zwischen 85 und 140°C umfasst.

**6.** Thermisch expandierbare Zusammensetzung nach einem der Ansprüche 1 bis 5, **dadurch gekennzeichnet, dass** die Zusammensetzung

(a) mindestens ein Polymer, welches Glycidyl(meth)acrylat als Monomer einpolymerisiert enthält umfasst; und/oder
(b) mindestens ein niedermolekulares, multifunktionelles Acrylat umfasst; und/oder
(c) die Bestandteile b)-d) in einem Masterbatch eingesetzt werden.

**7.** Formkörper, **dadurch gekennzeichnet, dass** der Formkörper eine thermisch expandierbare Zusammensetzung nach einem der Ansprüche 1 bis 6 aufweist.

**8.** Verfahren zum Abdichten und Füllen von Hohlräumen in Bauteilen, zum Verstärken oder Versteifen von Bauteilen, insbesondere hohlen Bauteilen, und zum Verkleben von beweglichen Bauteilen unter Verwendung einer thermisch expandierbaren Zusammensetzung nach einem der Ansprüche 1 bis 6 oder einem Formkörper nach Anspruch 7.

**9.** Verfahren nach Anspruch 8 zum Abdichten und Füllen von Hohlräumen in Bauteilen, zum Verstärken oder Versteifen von Bauteilen, **dadurch gekennzeichnet, dass** ein Formkörper nach Anspruch 7 in ein Bauteil, insbesondere den Hohlraum eines Bauteils, eingebracht wird und anschließend auf eine Temperatur oberhalb von 130°C erhitzt wird, so dass die thermisch expandierbare Zusammensetzung expandiert und das Bauteil abdichtet, füllt, verstärkt oder versteift.

**10.** Verwendung eines Formkörpers nach Anspruch 7 zur akustischen Abdichtung von Hohlräumen in Bauteilen und/oder zur Abdichtung von Hohlräumen in Bauteilen gegen Wasser und/oder Feuchtigkeit oder zum Verstärken oder Versteifen von Bauteilen, insbesondere hohlen Bauteilen.

Europäisches Patentamt
European Patent Office
Office européen des brevets

# EUROPÄISCHER RECHERCHENBERICHT

Nummer der Anmeldung

EP 21 18 3864

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/317881 A1 (ZHANG XINYU [CN] ET AL) 8. Oktober 2020 (2020-10-08) * Beispiel 4 * | 1-10 | INV. C08J9/00 C08J9/10 |
| X | US 2007/100060 A1 (TAHRI LAURENT [FR] ET AL) 3. Mai 2007 (2007-05-03) * Absätze [0048], [0066], [0118] - [0128] * * Abbildung 4 * | 1,3-10 | |
| A | US 2020/207937 A1 (PARIPOVIC DUSKO [CH] ET AL) 2. Juli 2020 (2020-07-02) * Beispiele E1-E19; Tabellen 1-4 * | 1-10 | |
| A | US 2018/355138 A1 (WOLSCHLEGER LESLIE [US] ET AL) 13. Dezember 2018 (2018-12-13) * Beispiele C1-C8; Tabelle 1 * | 1-10 | |
| A | US 2021/061981 A1 (FRICK KARSTEN [CH] ET AL) 4. März 2021 (2021-03-04) * Beispiele 1-12 * | 1-10 | RECHERCHIERTE SACHGEBIETE (IPC) C08J |

Der vorliegende Recherchenbericht wurde für alle Patentansprüche erstellt

| Recherchenort | Abschlußdatum der Recherche | Prüfer |
|---|---|---|
| Den Haag | 2. Dezember 2021 | Mayer, Anne |

EPO FORM 1503 03.82 (P04C03)

**EP 4 116 363 A1**

**ANHANG ZUM EUROPÄISCHEN RECHERCHENBERICHT
ÜBER DIE EUROPÄISCHE PATENTANMELDUNG NR.**  EP 21 18 3864

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-12-2021

| Im Recherchenbericht angeführtes Patentdokument | Datum der Veröffentlichung | Mitglied(er) der Patentfamilie | Datum der Veröffentlichung |
|---|---|---|---|
| US 2020317881 A1 | 08-10-2020 | CN 111511820 A | 07-08-2020 |
| | | EP 3728429 A1 | 28-10-2020 |
| | | KR 20200103058 A | 01-09-2020 |
| | | US 2020317881 A1 | 08-10-2020 |
| | | WO 2019119417 A1 | 27-06-2019 |
| US 2007100060 A1 | 03-05-2007 | AT 526356 T | 15-10-2011 |
| | | BR PI0616990 A2 | 05-07-2011 |
| | | CA 2624332 A1 | 12-04-2007 |
| | | CN 101341198 A | 07-01-2009 |
| | | CN 101341199 A | 07-01-2009 |
| | | EP 1772480 A1 | 11-04-2007 |
| | | EP 1940927 A1 | 09-07-2008 |
| | | ES 2374645 T3 | 20-02-2012 |
| | | ES 2449515 T3 | 20-03-2014 |
| | | JP 5133250 B2 | 30-01-2013 |
| | | JP 2009510241 A | 12-03-2009 |
| | | KR 20080077099 A | 21-08-2008 |
| | | PL 1940927 T3 | 29-06-2012 |
| | | US 2007100060 A1 | 03-05-2007 |
| | | US 2008176969 A1 | 24-07-2008 |
| | | WO 2007039308 A1 | 12-04-2007 |
| | | WO 2007039309 A1 | 12-04-2007 |
| US 2020207937 A1 | 02-07-2020 | CN 110997773 A | 10-04-2020 |
| | | EP 3665217 A1 | 17-06-2020 |
| | | US 2020207937 A1 | 02-07-2020 |
| | | WO 2019030107 A1 | 14-02-2019 |
| US 2018355138 A1 | 13-12-2018 | BR 112018010985 A2 | 04-12-2018 |
| | | CN 108368284 A | 03-08-2018 |
| | | EP 3390509 A1 | 24-10-2018 |
| | | JP 6863987 B2 | 21-04-2021 |
| | | JP 2019501254 A | 17-01-2019 |
| | | US 2018355138 A1 | 13-12-2018 |
| | | WO 2017102996 A1 | 22-06-2017 |
| US 2021061981 A1 | 04-03-2021 | CN 111566152 A | 21-08-2020 |
| | | EP 3508520 A1 | 10-07-2019 |
| | | EP 3735436 A1 | 11-11-2020 |
| | | JP 2021509926 A | 08-04-2021 |
| | | KR 20200106031 A | 10-09-2020 |
| | | US 2021061981 A1 | 04-03-2021 |
| | | WO 2019134842 A1 | 11-07-2019 |

EPO FORM P0461

Für nähere Einzelheiten zu diesem Anhang : siehe Amtsblatt des Europäischen Patentamts, Nr.12/82

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008034755 A
- WO 2007039309 A
- WO 2013017536 A
- DE 102012221192

- WO 2017055330 A
- WO 2017055329 A
- WO 2017108809 A
- WO 2018234368 A